Europäisches Patentamt

European Patent Office

Office européen des brevets

(19)

(11) **EP 0 454 277 B1**

(12) **EUROPEAN PATENT SPECIFICATION**

(45) Date of publication and mention
of the grant of the patent:
**03.07.1996 Bulletin 1996/27**

(51) Int Cl.6: **H04N 1/40**

(21) Application number: **91201311.7**

(22) Date of filing: **24.04.1991**

(54) **Method for breaking-up symmetry of matrix elements in an electronic half-tone screening processs**

Verfahren zum Aufbrechen der Symmetrie von Matrixelementen in einem elektronischen Rasterungsprozess

Procédé pour lever la symétrie des éléments matriciels dans un processus électronique de tramage

(84) Designated Contracting States:
**BE DE FR GB**

(30) Priority: **25.04.1990 US 514139**

(43) Date of publication of application:
**30.10.1991 Bulletin 1991/44**

(73) Proprietor: **Bayer Corporation
Pittsburgh, PA 15219-2502 (US)**

(72) Inventor: **Delabastita, Paul A.
Boston, MA 02116 (US)**

(74) Representative: **Ramon, Charles Lucien et al
Agfa-Gevaert N.V.
Dienst Intellectuele Eigendom 3800
Septestraat 27
2640 Mortsel (BE)**

(56) References cited:
**EP-A- 0 293 214          DE-A- 2 500 564
GB-A- 2 026 283**

## Description

### BACKGROUND OF THE INVENTION

The present invention relates to half-tone screening processes in general and, more particularly, to method for breaking-up symmetry of matrix elements in an electronic half-tone screening process.

The present invention is related to the inventions described in EP-A-0 454 276 and EP-A-0 454 274 for "Method for Multiplying Screening Frequency in an Electronic Half-Tone Screening Process" and "Method for Controlling Half-Tone Dot Shape During Dot Growth," respectively, filed simultaneoulsly herewith.

Most electronic halftoning techniques are based on the comparison of screen function values, defined at the resolution of the output recorder, with pixel values defined at that same resolution. The result of these comparisons determines for every addressable position if the medium is to be exposed or not by the recording device.

The distinction between different halftoning algorithms lies primarily in the way the screen function values are obtained, and how the resolution conversion of the pixels from scanner to recorder resolution is performed. In addition to that, special techniques and refinements have been described that improve the rendition of high frequency image components in the halftoning process, and that control the serration of the halftone dot boundaries. See "A Survey of Electronic Techniques for Pictorial Reproduction," IEEE Transactions on Communications, Vol. COM-29, No. 12, Dec. 1981, pp. 1,898-1,925.

### Pixel resolution conversion

The pixel resolution conversion from scanner to recorder resolution is essentially a resampling process, and the different techniques that have been described (0th order interpolation or replication, 1st order or linear interpolation, higher order interpolation processes ...) can usually be classified as one of the known sampling conversion techniques. See U.S. Patent No. US-A-4 533 942 and DE Patent No. DE-C-2 511 922.

### Calculation of screen function values

Two general classes of methods exist to obtain the screen function values for an electronic halftoning process.

### Use of a precalculated matrix or cell

In the first class of methods, screen functions are used that have an internal two dimensional periodicity when generated at the resolution of the output device. It is possible in that case to precalculate and store in a matrix or "cell" only one two dimensional period of the screen function and to reconstruct the whole function by repeating the period horizontally and vertically, like tiles on a floor. The two dimensional period contains typically more than one halftone dot. There are certain geometric relations between the size of a cell and the angle and ruling of the screen function it contains which restrict this method to the generation of rational screens. However, screening systems have been described for combinations of such rational screens that do work for high quality color reproduction, and that do not cause low frequency moire patterns. See U.S. Patent No. US-A-4 084 183. The advantage of this method is that the calculation of the two dimensional screen function period can be highly optimized, since it is done off line. A disadvantage is that only rational angles can be generated and that not every angle and ruling is available on the fly.

### On the fly calculation of screen function values

The second class of algorithms obtains screen function values by resampling a screen function period that was precalculated at 0 degrees under different angles and at different frequencies.

In a first subclass of this method, the angle and frequency of the resampling are limited to values that "lock" to the resolution grid of the precalculated screen period. With this method only screens with rational angles and only certain frequencies can be generated.

If more sophisticated resampling techniques are used, like e.g. weighted averaging and the addition of noise, the resampling of the precalculated screen period can be done at virtually any ruling and angle, including irrational angles.

Both the matrix and "on-the-fly" methods described above, require the availability of a screen function period. The calculation of the screen function period usually involves the evaluation of a screen function at all of the X-Y positions of a two dimensional matrix. Conventionally the domain of the matrix is scaled from -1.0 to +1.0 in both the x and y directions with the origin in the middle.

After the screen function has been evaluated for all the elements of the matrix, the function values are ordered, and it is this order which then controls how the micro dots will build up the dot as the dot grows.

In order to increase the number of available gray levels and to reduce interference artifacts, the symmetry of the X-Y coordinate elements in one or more matrices of the screen function period should be broken up.

It is accordingly a general object of the invention to provide a method for breaking up the symmetry of the matrix elements.

It is a specific object of the invention to provide a method for breaking up such symmetry that employs the use of irrational numbers added to the X and Y-coordinate values of the matrix elements.

## SUMMARY OF THE INVENTION

The above objects of the invention are realised by a method for breaking-up symmetry of matrix elements in a screen function period suitable for an electronic half-tone screening process, said method comprising the steps of :

A. determining the x-coordinate values of a plurality of X-Y coordinate elements in a matrix of the screen function period ;
B. determining the y-coordinate values of a plurality of X-Y coordinate elements in said matrix of the screen function period ;
C. adding to each x-coordinate value an irrational number $x_0$; and,
D. adding to each y-coordinate value an irrational number $y_0$.

According to preferred embodiments of the invention the X and Y-coordinate values x and y, respectively, are determined for each X-Y coordinate element in a matrix of the screen function period. The symmetry of these matrix elements is broken up by adding the same or different irrational numbers to each pair of X-coordinate and Y-coordinate values.

## BRIEF DESCRIPTION OF THE DRAWINGS

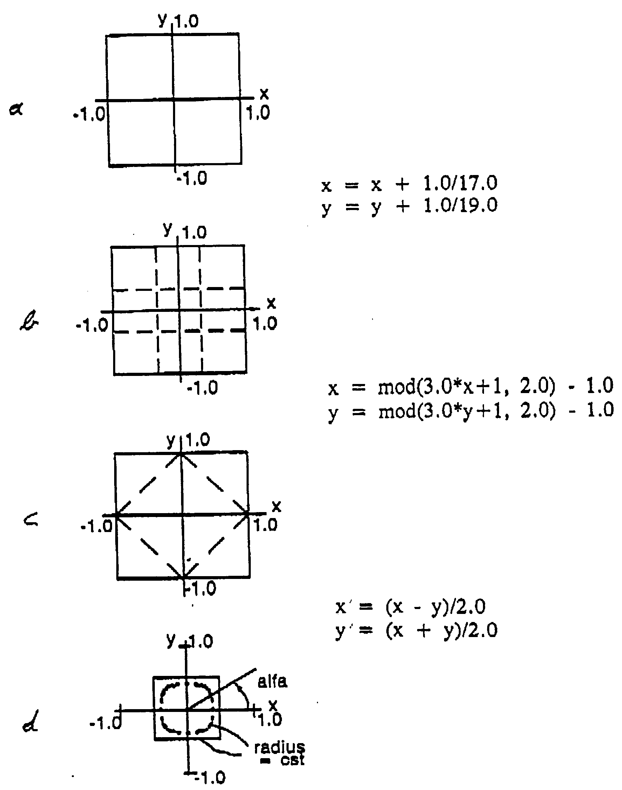

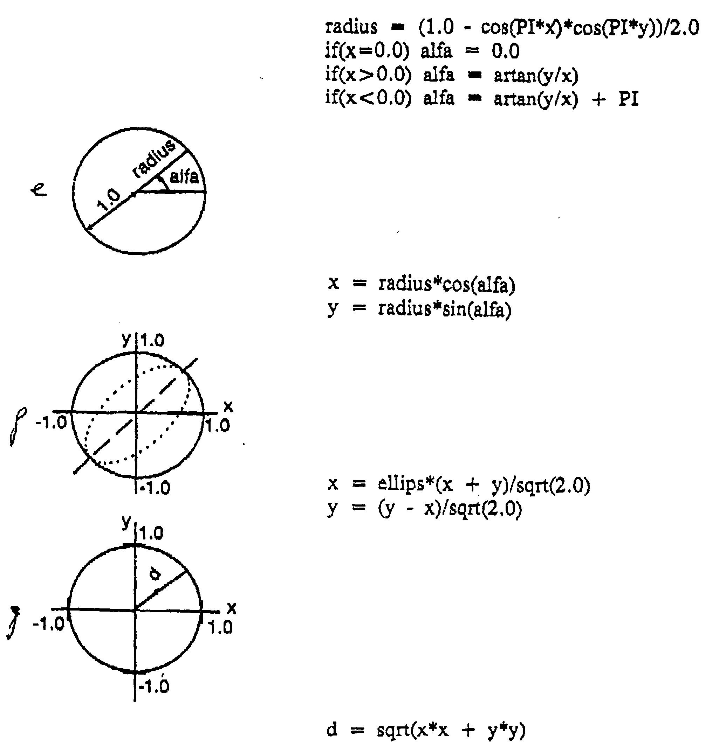

The objects and features of the invention will best be understood from a detailed description of a preferred embodiment thereof selected for purposes of illustration and shown in the accompanying single Figure that is divided into Sections A-G in which:

Section A    depicts a screen cell with an associated formula for adding irrational numbers to the X and Y coordinates, X and Y respectively;

Section B    depicts the multiplication of screen frequency in accordance with the associated formula for a modulo operation;

Section C    depicts the rotation of the 50% square dot in accordance with the associated formula to produce the square box shown in Section D;

Section D    depicts the rotated rhombus of Section C as a square box, the Cartesian coordinates of which are converted into a non-linear polar coordinate system through the associated formula to produce the circular figure shown in Section E;

Section E    depicts the coordinate system converted square box of Section D in non-linear polar form;

Section F    depicts the Section E figure converted to Cartesian coordinates through the formula associated with Section E; and,

Section G    depicts the figure of Section F rotated in the opposite direction and by the same angular amount as the rotation depicted between Sections C and D through the formula associated with Section F and illustrates the screen function value "s" in the associated formula.

## DETAILED DESCRIPTION OF THE INVENTION

The present invention will be described in the broader context of generating a screen function that has the capability to break up matrix element symmetry, generate multiple dots in one matrix and produces excellent dot shapes, both quadratic and elliptical. Reference is made to the copending applications cited above.

The screen function described below is defined for an angle of 0 degrees. Other screen angles can be obtained from this basic definition.

The different steps to calculate the screen function value "s" from the X-Y coordinates in the matrix are summarized in the following table, and will be explained in further detail.

$$x = x + x0$$

$$y = y + y0$$

$$x = mod(m*x + 1.0, 2.0) - 1.0$$

$$y = mod(m*y + 1.0, 2.0) - 1.0$$

$$x = (x - y)/2.0$$

$$y = (x + y)/2.0$$

$$radius = (1.0 - cos(pi*x)*cos(pi*y)/2.0$$

$$if(x > 0.0)angle = artan(y/x)$$

$$if(x < 0.0)angle = artan(y/x) + pi$$

$$x = radius*cos(alfa)$$

$$y = radius*sin(alfa)$$

$$x = ellips*(x+y)/sqrt(2.0)$$

$$y = (-x + y)/sqrt(2.0)$$

$$s = sqrt(x*x + y*y)$$

**First step: the addition of an irrational number to the x and y coordinates**

$$x = x + x0$$

y = y + y0

By adding irrational numbers such as, two different, constant irrational numbers to each X and Y coordinate element, symmetry can be broken up. The constant irrational numbers may also have the same value. The matrix elements that have a symmetric position in the matrix and would otherwise receive the same screen function values, will now receive different values. This technique resolves the problem of ordering matrix elements which would otherwise have the same screen function values. It also provides a way of dithering if cells with multiple dots are used, as described below.

**Second step: multiplication of the screen frequency**

x = mod(m*x + 1.0,2.0) - 1.0

y = mod(m*y + 1.0,2.0) - 1.0

The frequency of the screen function is multiplied by an integer factor using the modulo operation. The modulo operation maps the domain range of -1.0 to +1.0 into a sequence of m times -1.0 to +1.0. The result is a multiplication of the frequency of the screen function by m, and an increase of the number of dots in the screen function period from 1 to m*m. Each of the dotted boxes in Section B of the single Figure will produce a complete screen dot.

The utilization of this generic frequency scaling technique provides the capability to produce dots of which the centers are not on the grid of the original matrix. These are dots of screens with frequencies that otherwise would not be available.

**Third step: rotation by 45 degrees and scaling by 1/sqrt(2.0)**

x = (x - y)/2.0

y = (x + y)/2.0

The purpose of this operation is to rotate the shape of the 50% square dot so that it becomes aligned with the x and y directions. The rotation is used to obtain the desired dot shapes in combination with the next coordinate transformation in which the dotted rhombus of Section C is transformed into the 50% square box of Section D.

**Fourth step: the conversion from a Cartesian to a non linear polar coordinate system**

radius = (1.0 - cos(pi*x)*cos(pi*y))/2.0

if(x > 0.0)angle = artan(y/x)

if(x < 0.0)angle = artan(y/x) + pi

This step controls the dot shapes as they grow from 0% to 100%. The angle alfa is the same as in a normal polar coordinate system. However, the radius measures the distance in a very particular way that is also shown in Section D. The dotted "isolines" in Section D are approximately circular close to the origin, while they become gradually square as the x and y coordinates approach +/-0.5. This evolution from round to square controls the shape of the dots as they grow from 0% to 50%. Thus, the dots grow through a shape sequence of round at the beginning, through rounded square to square at the 50% level, and then back to rounded square to finally round again at 100%.

If no elliptical dots are required, the screen function "s" value is made equal to the value of "radius". However, if elliptical dot shapes are desired, further transformations are employed.

Fifth step: the conversion back to Cartesian coordinates

x = radius*cos(alfa)

y = radius*sin(alfa)

The polar coordinate system is again transformed into a Cartesian coordinate system.

Sixth step: rotation by -45 degrees and compression/ expansion of the x dimension

x = ellips*(x + y)/sqrt(2.0)

y = (y - x)/sqrt(2.0)

The ellipticity is obtained by measuring distance anamorphically in and perpendicular to the screening angle. Therefore, the coordinate system is rotated 45 degrees back to its original angle. It should be understood that the sequence of Steps 5 and 6 can be reversed so that the rotation on the value of "alfa" would occur after "step four".

**Seventh step**

s = sqrt(x*x + y*y)

The euclidian distance "d" in the X-Y coordinate system is calculated and returned as the screen function value "s".

Having described a preferred embodiment of the invention, it will now be apparent to those skilled in the art that numerous modifications can be made therein without departing from the scope of the invention as defined in the following claims.

## Claims

1. A method for breaking-up symmetry of matrix elements in a screen function period suitable for an electronic half-tone screening process, said method comprising the steps of :

   A. determining the x-coordinate values of a plurality of X-Y coordinate elements in a matrix of the screen function period ;
   B. determining the y-coordinate values of a plurality of X-Y coordinate elements in said matrix of the screen function period ;
   C. adding to each x-coordinate value an irrational number $x_0$; and,
   D. adding to each y-coordinate value an irrational number $y_0$.

2. Method according to claim 1 wherein $x_0$ and $y_0$ are different numbers.

3. Method according to claim 1, wherein $x_0$ and $y_0$ are constant irrational numbers.

4. Method according to claim 3, wherein $x_0$ is different from $y_0$.

5. Method according to claim 1 wherein $x_0$ is equal to $y_0$.

## Patentansprüche

1. Verfahren zum Zerstören der Symmetrie von Matrixelementen in einer Rasterfunktionsperiode, das für ein elektronisches Rasterverfahren geeignet ist, wobei das besagte Verfahren folgende Schritte umfaßt:

   A. Bestimmen der x-Koordinatenwerte einer Mehrzahl von X-Y-Koordinatenelementen in einer Matrix der Rasterfunktionsperiode;
   B. Bestimmen der y-Koordinatenwerte einer Mehrzahl von X-Y-Koordinatenelementen in der besagten Matrix der Rasterfunktionsperiode;
   C. Hinzufügen einer irrationalen Zahl $x_0$ zu jedem x-Koordinatenwert; und
   D. Hinzufügen einer irrationalen Zahl $y_0$ zu jedem y-Koordinatenwert.

2. Verfahren nach Anspruch 1, wobei $x_0$ und $y_0$ unterschiedliche Zahlen sind.

3. Verfahren nach Anspruch 1, wobei $x_0$ und $y_0$ konstante irrationale Zahlen sind.

4. Verfahren nach Anspruch 3, wobei sich $x_0$ von $y_0$ unterscheidet.

5. Verfahren nach Anspruch 1, wobei $x_0$ gleich $y_0$ ist.

## Revendications

1. Méthode pour rompre la symétrie d'éléments de matrice dans une période de fonction de trame convenant à un procédé de tramage électronique, ladite méthode comprenant les étapes de:

   A. détermination des valeurs de coordonnée x d'une pluralité d'éléments de coordonnées X-Y dans une matrice de la période de fonction de trame;
   B. détermination des valeurs de coordonnées y d'une pluralité d'éléments de coordonnées X-Y dans ladite matrice de la période de fonction de trame;
   C. addition à chaque valeur de coordonnée x d'un nombre irrationnel $x_0$; et
   D. addition à chaque valeur de coordonnée y d'un nombre irrationnel $y_0$.

2. Méthode selon la revendication 1, dans laquelle $x_0$ et $y_0$ sont des nombres différents.

3. Méthode selon la revendication 1, dans laquelle $x_0$ et $y_0$ sont des nombres irrationnels constants.

4. Méthode selon la revendication 3, dans laquelle $x_0$ est différent de $y_0$.

5. Méthode selon la revendication 1, dans laquelle $x_0$ est égal à $y_0$.

a

$$x = x + 1.0/17.0$$
$$y = y + 1.0/19.0$$

b

$$x = mod(3.0*x+1, 2.0) - 1.0$$
$$y = mod(3.0*y+1, 2.0) - 1.0$$

c

$$x' = (x - y)/2.0$$
$$y' = (x + y)/2.0$$

d

alfa

radius
= cst

radius $=$ (1.0 - cos(PI*x)*cos(PI*y))/2.0
if(x=0.0) alfa $=$ 0.0
if(x>0.0) alfa $=$ artan(y/x)
if(x<0.0) alfa $=$ artan(y/x) + PI

e

x $=$ radius*cos(alfa)
y $=$ radius*sin(alfa)

f

x $=$ ellips*(x + y)/sqrt(2.0)
y $=$ (y - x)/sqrt(2.0)

g

d $=$ sqrt(x*x + y*y)